# EUROPÄISCHE PATENTSCHRIFT

(11) **EP 2 444 174 B1**
(45) Veröffentlichungstag und Bekanntmachung des Hinweises auf die Patenterteilung: **27.11.2013**
(21) Anmeldenummer: 10188498.9
(22) Anmeldetag: 22.10.2010
(51) Int. Cl.: B21D 43/00, B21D 43/11

(54) **Maschinelle Anordnung zum Bearbeiten von Werkstücken, insbesondere von Blechen, sowie Verfahren zum Entladen von Werkstücken an einer derartigen maschinellen Anordnung**
Mechanical assembly for processing workpieces, in particular sheet metal and method for discharging workpieces on such a mechanical assembly
Agencement mécanique pour le traitement de pièces usinées, notamment des tôles, ainsi que procédé de déchargement de pièces usinées sur un tel agencement mécanique

(43) Veröffentlichungstag der Anmeldung: 25.04.2012
(73) Patentinhaber: TRUMPF Corporation, Midori-ku Yokohama 2260006 (JP)
(72) Erfinder: Bytow, Peter, 75397 Simmozheim (DE); Enomoto, Katsuya, Yokohama (JP)
(74) Vertreter: Kohler Schmid Möbus

(56) Entgegenhaltungen:
- EP-A1- 0 331 661
- EP-A1- 1 935 526
- US-A1- 2003 147 729

## Beschreibung

Die Erfindung betrifft eine maschinelle Anordnung zum Bearbeiten von Werkstücken, insbesondere von Blechen,
- mit einer Werkstückauflage,
- mit einer Beladeeinrichtung, die eine relativ zu der Werkstückauflage angetrieben bewegbare Werkstückhalterung aufweist und mittels derer der Werkstückauflage ein Werkstück zuführbar ist, indem die Werkstückhalterung gemeinsam mit einem daran festgelegten Werkstück mit einer Beladebewegung relativ zu der Werkstückauflage bewegbar ist sowie
- mit einer Entladeeinrichtung in Form einer Abstreifeinrichtung, die eine Werkstückfixiervorrichtung aufweist und mittels derer ein Werkstück von der Werkstückauflage abstreifbar ist, indem die Werkstückfixiervorrichtung mit einer Positionierbewegung in eine Abstreifposition bewegbar ist, in welcher ein abzustreifendes Werkstück an der Werkstückfixiervorrichtung festlegbar ist und indem das an der Werkstückfixiervorrichtung festgelegte Werkstück einerseits und die Werkstückauflage andererseits unter Abstreifen des Werkstücks von der Werkstückauflage mit einer Abstreifbewegung relativ zueinander bewegbar sind.

Die Erfindung betrifft des Weiteren ein Verfahren zum Entladen von Werkstücken von einer Werkstückauflage einer maschinellen Anordnung zum Bearbeiten von Werkstücken, insbesondere von Blechen, die eine Beladeeinrichtung mit einer relativ zu der Werkstückauflage angetrieben bewegbaren Werkstückhalterung sowie eine Entladeeinrichtung in Form einer Abstreifeinrichtung mit einer Werkstückfixiervorrichtung aufweist,
- wobei der Werkstückauflage mittels der Beladeeinrichtung ein Werkstück zugeführt wird, indem die Werkstückhalterung der Beladeeinrichtung gemeinsam mit einem daran festgelegten Werkstück mit einer Beladebewegung relativ zu der Werkstückauflage bewegt wird und
- wobei von der Werkstückauflage mittels der Abstreifeinrichtung ein Werkstück abgestreift wird, indem die Werkstückfixiervorrichtung der Abstreifeinrichtung mit einer Positionierbewegung in eine Abstreifposition bewegt wird, in welcher ein abzustreifendes Werkstück an der Werkstückfixiervorrichtung festgelegt wird und indem das an der Werkstückfixiervorrichtung festgelegte Werkstück einerseits und die Werkstückauflage andererseits unter Abstreifen des Werkstückes von der Werkstückauflage mit einer Abstreifbewegung relativ zueinander bewegt werden.

Gattungsgemäßer Stand der Technik ist bekannt aus US 2003/0147729 A1. Diese Druckschrift offenbart eine maschinelle Anordnung mit einer Werkzeugmaschine für die Blechbearbeitung sowie mit einer maschinelle Be- und Entladeeinrichtung für die Werkzeugmaschine. Die Be- und Entladeeinrichtung weist einen Maschinenrahmen auf, an welchem eine Beladeeinheit in Form eines Saugerrahmens sowie ein Greifer einer Entladeeinheit motorisch angetrieben und numerisch gesteuert bewegt werden. Mittels des Saugerrahmens werden einer Werkstückauflage der Werkzeugmaschine zu bearbeitende Bleche zugeführt. Die zu bearbeitenden Bleche werden dabei durch Sauger des Saugerrahmens von einer unterhalb der Werkstückauflage angeordneten Palette aufgenommen und nach einer anschließenden Hubbewegung des Saugerrahmens und des daran gehaltenen Bleches auf der Werkstückauflage abgelegt. Nach dem Beschicken der Werkstückauflage mit einem zu bearbeitenden Blech wird der Saugerrahmen wieder auf ein Niveau unterhalb der Werkstückauflage abgesenkt. Der Greifer verfährt nach Abschluss der Blechbearbeitung in horizontaler Richtung aus einer Parkposition in eine Abstreifposition. In der Abstreifposition erfasst der Greifer einen Rand des bearbeiteten Bleches, das seinerseits auf der Werkstückauflage der Werkzeugmaschine ruht. Bei in der Abstreifposition verharrendem Greifer wird die Werkstückauflage unter dem bearbeiteten Blech parallel zu der an der Werkstückauflage ausgebildeten Auflageebene herausgezogen. Das bearbeitete Blech, das an dem Greifer fixiert ist und folglich die Bewegung der Werkstückauflage nicht mitvollziehen kann, wird von der Werkstückauflage abgestreift und auf einer unterhalb der Werkstückauflage angeordneten Palette abgelegt. Der Saugerrahmen und der Greifer des Standes der Technik werden aufeinander abgestimmt betrieben, sind aber antriebsmäßig voneinander getrennt.

Den beschriebenen Stand der Technik konstruktiv zu vereinfachen und ein mit konstruktiv vereinfachten Mitteln realisiertes Verfahren zum Entladen von Werkstücken bereitzustellen, ist Aufgabe der vorliegenden Erfindung.

Erfindungsgemäß gelöst wird diese Aufgabe durch die maschinelle Anordnung nach Patentanspruch 1 und durch das Verfahren nach Patentanspruch 13.

Im Falle der Erfindung ist die Werkstückfixiervorrichtung der Abstreifeinrichtung bei ihrer Positionierbewegung in die Abstreifposition wenigstens teilweise an die Werkstückhalterung der Beladeeinrichtung angebunden. Aufgrund der bewegungsmäßigen Kopplung von Werkstückfixiervorrichtung und Werkstückhalterung kann der Antrieb der Werkstückhalterung gleichzeitig für die Positionierbewegung der Werkstückfixiervorrichtung genutzt werden. Der Antrieb von Werkstückfixiervorrichtung und Werkstückhalterung lässt sich folglich mit einem geringen konstruktiven Aufwand realisieren. In Folge der Doppelnutzung ein und desselben Antriebes können im Vergleich zum Einsatz zweier separater Antriebe Bauteile eingespart werden. Die Bauteilersparnis wiederum bedingt einen kompakten Aufbau der Gesamtanordnung.

Besondere Ausführungsarten der in den unabhängigen Patentansprüchen beschriebenen Erfindung ergeben sich aus den abhängigen Patentansprüchen 2 bis 12.

Ausweislich Patentanspruch 2 ist in bevorzugter Ausgestaltung der Erfindung die Bewegungsverbindung zwischen der Werkstückfixiervorrichtung der Abstreifeinrichtung und der Werkstückhalterung der Beladeeinrichtung der Einfachheit halber mittels einer mechanischen Verbindung hergestellt.

Im Falle einer weiteren bevorzugten Erfindungsbauart ist zu diesem Zweck die Werkstückfixiervorrichtung an einer Tragstruktur der Werkstückhalterung angebracht (Patentanspruch 3). Die Werkstückhalterung weist Halteorgane üblicher Bauart auf, mittels derer zu bearbeitende Werkstücke beim Beladevorgang an der Werkstückhalterung festgelegt sind. Als Halteorgane in Frage kommen beispielsweise Sauger oder Haltemagnete.

In weiterer vorteilhafter Ausgestaltung der Erfindung ist ausweislich Patentanspruch 4 vorgesehen, dass die Werkstückfixiervorrichtung und/oder die Werkstückhalterung unter die Werkstückauflage absenkbar ist bzw. sind. Die Werkstückfixiervorrichtung und/oder die Werkstückhalterung können demnach in Positionen bewegt werden, in welchen sie die Abläufe an der Oberseite der Werkstückauflage, insbesondere die dort erfolgende Werkstückbearbeitung, nicht behindern und in denen sie gleichzeitig gegen bearbeitungsbedingte Einflüsse, etwa Verschmutzung, geschützt sind. Außerdem können die Werkstückfixiervorrichtung und die Werkstückhalterung bei entsprechender Beweglichkeit der Werkstückauflage von dieser überfahren werden. Dies bedingt eine platzsparende Bauweise der erfindungsgemäßen maschinellen Anordnung.

Die Abstreifbewegung zum Entladen von Werkstücken von der Werkstückauflage kann erfindungsgemäß auf unterschiedliche Art und Weise erzeugt werden. Erfindungsgemäß bevorzugt wird die in Patentanspruch 5 beschriebene Lösung. In diesem Fall wird die Werkstückauflage unter Abstreifen des Werkstücks relativ zu dem an der Werkstückfixiervorrichtung der Entladeeinrichtung festgelegten Werkstück bewegt. Zur Erzeugung der Abstreifbewegung wird folglich die in vielen Fällen ohnehin bestehende Beweglichkeit der Werkstückauflage genutzt. Die Werkstückfixiervorrichtung kann während des Abstreifvorgangs in der Abstreifposition verharren.

Im Falle der Erfindungsbauart nach Patentanspruch 6 verfügt die Werkstückfixiervorrichtung der Entladeeinrichtung über ein eigens für die Festlegung des abzustreifenden Werkstückes vorgesehenes Fixierorgan.

Die in die Abstreifposition bewegte Werkstückfixiervorrichtung lässt sich in weiterer bevorzugter Ausgestaltung der Erfindung aktivieren oder deaktivieren. Im aktivierten Zustand legt die Werkstückfixiervorrichtung das abzustreifende Werkstück fest (Patentanspruch 7). Dass die Werkstückfixiervorrichtung wahlweise aktivierbar oder deaktivierbar ist, erweist sich insbesondere in Anbetracht der bewegungsmäßigen Kopplung der Werkstückfixiervorrichtung an die Werkstückhalterung der Beladeeinrichtung als zweckmäßig. Es besteht insbesondere die Möglichkeit, die Werkstückfixiervorrichtung während der gemeinsam mit der Werkstückhalterung ausgeführten Positionierbewegung in die Abstreifposition zu deaktivieren und den aktivierten Zustand der Werkstückfixiervorrichtung erst dann herzustellen, wenn diese die Abstreifposition erreicht hat und folglich in der Lage sein muss, von der Werkstückauflage abzustreifende Werkstücke festzulegen. Vorzugsweise ist das Baumaß der Einheit aus Werkstückfixiervorrichtung und Werkstückhalterung bei deaktivierter Werkstückfixiervorrichtung kleiner als bei aktivierter Werkstückfixiervorrichtung.

Weist die Werkstückfixiervorrichtung ein Fixierorgan auf, so empfiehlt es sich, zur Aktivierung oder Deaktivierung der Werkstückfixiervorrichtung das Fixierorgan mit einer Aktivierungsbewegung in eine Funktionsstellung oder mit einer Deaktivierungsbewegung in eine Außerfunktionsstellung zu bewegen (Patentanspruch 8). Die Außerfunktionsstellung des Fixierorgans ist insbesondere derart gewählt, dass das Fixierorgan die Positionierbewegung der Werkstückfixiervorrichtung in die Abstreifposition nicht behindert.

Im Interesse möglichst einfacher kinematischer Verhältnisse wird in weiterer bevorzugter Ausgestaltung der Erfindung zur Überführung des Fixierorgans der Werkstückfixiervorrichtung in die Funktionsstellung und/oder in die Außerfunktionsstellung eine wenigstens zum Teil lineare Aktivierungsbewegung bevorzugt (Patentanspruch 9).

Insbesondere lineare Aktivierungs- und/oder Deaktivierungsbewegungen werden erfindungsgemäß mittels einer Kolben-/Zylindereinheit erzeugt (Patentanspruch 10). Zum Betrieb der Kolben-/Zylindereinheit können Medien, insbesondere Druckluft oder Druckflüssigkeiten, verwendet werden, die an maschinellen Anordnungen der erfindungsgemäßen Art ohnehin benötigt werden.

Durch einen konstruktiv besonders einfachen Aufbau zeichnet sich die Erfindungsbauart gemäß Patentanspruch 11 aus, im Falle derer das Fixierorgan der Werkstückfixiervorrichtung als Anschlag ausgebildet ist. Als Anschlag genutzt werden kann ein speziell für die Fixierung abzustreifender Werkstücke bestimmtes Bauteil. Alternativ besteht aber auch die Möglichkeit, anderweitig genutzte Einrichtungen als Anschlag für abzustreifende Werkstücke vorzusehen. Als Anschlag denkbar sind insbesondere Teile der Werkstückhalterung, wie beispielsweise Grundkörper von Saugern, die ansonsten zur Festlegung von Werkstücken an der Werkstückhalterung dienen.

Im Interesse eines funktionssicheren Betriebes der erfindungsgemäßen maschinellen Anordnung sowie eines ungestörten Ablaufes des erfindungsgemäßen Verfahrens werden in bevorzugter Ausgestaltung der Erfindung von der Werkstückauflage abgestreifte Werkstücke mittels der Werkstückfixiervorrichtung geführt (Patentanspruch 12). Die Werkstückführung gewährleistet, dass sich die von der Werkstückauflage abgestreiften Werkstücke entlang einer definierten Bewegungsbahn bewegen. Dadurch kann insbesondere verhindert werden, dass Werkstücke beim Abstreifen von der Werkstückauflage Teile oder Einrichtungen in ihrer Umgebung beschädigen.

Nachstehend wird die Erfindung anhand beispielhafter schematischer Darstellungen näher erläutert. Es zeigen:
- Figur 1: eine perspektivische Gesamtansicht einer maschinellen Anordnung für die Blechbearbeitung mit einer Stanzmaschine sowie mit einer Automatisierungseinheit,
- Figuren 2 und 3: verschiedene Ansichten einer Werkstückfixiervorrichtung der Automatisierungseinheit gemäß Figur 1 und
- Figuren 4 bis 11: Darstellungen zur Veranschaulichung eines Bearbeitungszyklus an der maschinellen Anordnung gemäß Figur 1.

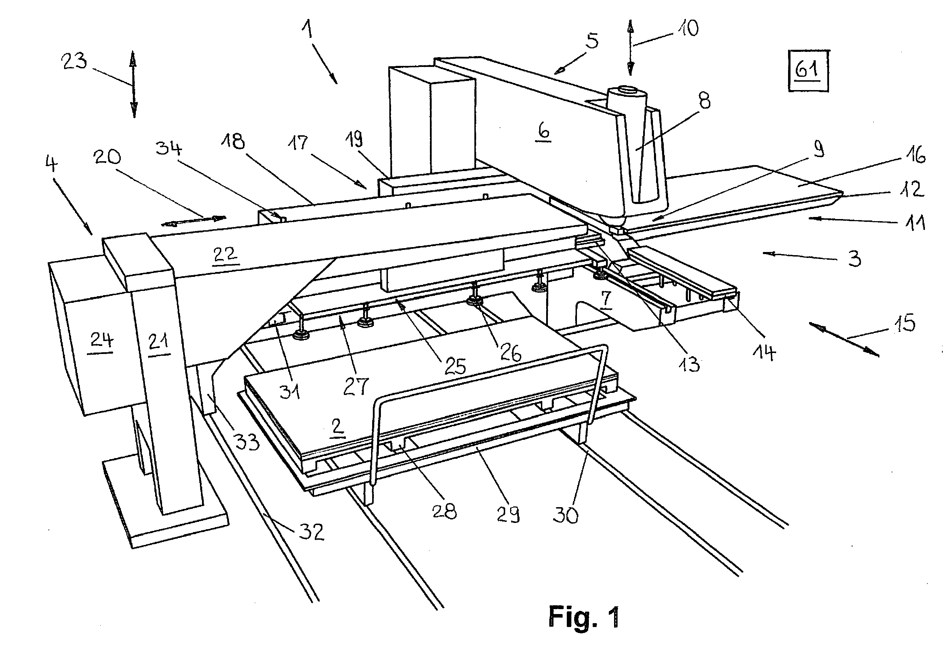

Gemäß Figur 1 umfasst eine maschinelle Anordnung 1 zum stanzenden Bearbeiten von Werkstücken in Form von (Roh-)Blechen 2 eine Stanzmaschine 3 sowie eine Automatisierungseinheit 4.

Die Stanzmaschine 3 besitzt ein C-förmiges Maschinengestell 5 mit einem oberen Gestellschenkel 6 und einem unteren Gestellschenkel 7. An dem freien Ende des oberen Gestellschenkels 6 befindet sich ein Stanzantrieb 8 einer Stanzstation 9 der Stanzmaschine 3. An der Stanzstation 9 wird in gewohnter Weise ein an dem oberen Gestellschenkel 6 geführter Stanzstempel relativ zu einer an dem unteren Gestellschenkel 7 vorgesehenen Stanzmatrize in einer Hubrichtung 10 bewegt.

Eine Werkstückauflage 11 ist an dem unteren Gestellschenkel 7 abgestützt und umfasst zwei bewegliche Auflagenteile 12, 13, die beidseits eines stationären Auflageteils 14 angeordnet sind. Die beweglichen Auflagenteile 12, 13 können mittels eines nicht gezeigten Antriebes in einer Bewegungsrichtung (Doppelpfeil) 15 längs des unteren Gestellschenkels 7 bewegt werden. Sowohl die beweglichen Auflagenteile 12, 13 als auch der stationäre Auflagenteil 14 der Werkstückauflage 11 sind an ihrer Oberseite mit herkömmlichen Auflagebürsten 16 versehen.

Im Rachenraum des Maschinengestells 5 der Stanzmaschine 3 ist eine Koordinatenführung 17 üblicher Bauart untergebracht. Diese umfasst in gewohnter Weise eine Querschiene 18 sowie eine hierfür vorgesehene Querführung 19. An der Querführung 19 ist die Querschiene 18 in einer Bewegungsrichtung (Doppelpfeil) 20 bewegbar geführt. Die Bewegungsrichtung 20 der Querschiene 18 verläuft senkrecht zu der Bewegungsrichtung 15 der beweglichen Auflagenteile 12, 13 der Werkstückauflage 11. Wie üblich sind an der Querschiene 18 der Einfachheit halber nicht gezeigte Spannpratzen zur Fixierung der zu bearbeitenden Werkstücke angebracht. Außerdem wird auch die Querschiene 18 der beispielhaft dargestellten Stanzmaschine 3 als Linearmagazin für Stanzwerkzeuge genutzt. Gemeinsam mit der Querführung 19 und den mit dieser verbundenen beweglichen Auflagenteile 12, 13 der Werkstückauflage 11 kann die Querschiene 18 in der Bewegungsrichtung 15 der beweglichen Auflagenteile 12, 13 verfahren. Aufgrund der Bewegungsmöglichkeiten der Querschiene 18 können Werkstücke, die mittels der Spannpratzen an der Querschiene 18 festgelegt sind, in einer durch die Bewegungsrichtungen 15, 20 aufgespannten Horizontalebene gegenüber der Stanzstation 9 bewegt werden. In gewohnter Weise werden die Bewegungsmöglichkeiten der Querschiene 18 auch zum Werkzeugwechsel an der Stanzstation 9 genutzt.

Die Automatisierungseinheit 4 ist in unmittelbarer Nachbarschaft der Stanzmaschine 3 aufgestellt. Sie bildet eine separate Einheit ohne mechanische Verbindung mit dem Maschinengestell 5 der Stanzmaschine 3.

Die Automatisierungseinheit 4 weist eine Führungssäule 21 sowie einen von dieser in horizontaler Richtung vorkragenden Ausleger 22 auf. Der Ausleger 22 ist an der Führungssäule 21 in einer senkrechten Bewegungsrichtung (Doppelpfeil) 23 bewegbar geführt. Bei Bewegungen in der Bewegungsrichtung 23 wird der Ausleger 22 durch einen motorischen Antrieb 24 angetrieben, der seinerseits in einem an der Führungssäule 21 montierten Antriebsgehäuse untergebracht ist.

An der Unterseite des Auslegers 22 ist ein Saugerrahmen 25 aufgehängt. Dieser ist mit einer Mehrzahl von Halteorganen versehen, die in dem gezeigten Beispielsfall als Sauger 26 ausgeführt sind. Der Ausleger 22, der Saugerrahmen 25 und die Sauger 26 bilden eine Werkstückhalterung 27. Der Ausleger 22 übernimmt dabei die Funktion einer Tragstruktur der Werkstückhalterung 27.

Die Werkstückhalterung 27 mit dem Ausleger 22, dem Saugerrahmen 25 und den Saugern 26 kann in der Bewegungsrichtung 23 über die Werkstückauflage 11 der Stanzmaschine 3 angehoben und unter die Werkstückauflage 11 abgesenkt werden. Diese Bewegungsmöglichkeit der Werkstückhalterung 27 wird zum Beladen der Werkstückauflage 11 mit (Roh-)Blechen 2 genutzt. Insofern bildet die mit der Werkstückhalterung 27 versehene Automatisierungseinheit 4 eine Beladeeinrichtung der maschinellen Anordnung 1.

Figur 1 zeigt die Werkstückhalterung 27 in der oberen Endstellung an der Führungssäule 21. Unterhalb des Saugerrahmens 25 und der Sauger 26 ist in dem dort verbleibenden Freiraum eine Rohblechpalette 28 mit zu bearbeitenden (Roh-)Blechen 2 angeordnet. Die Rohblechpalette 28 ist auf einem Palettenwagen 29 gelagert. Dieser kann manuell auf Führungsschienen 30 bewegt werden.

In Figur 1 weitgehend verdeckt ist eine Fertigteilpalette 31, die gleichgerichtet mit dem Palettenwagen 29 verfahren kann. Zu diesem Zweck ist die Fertigteilpalette 31 über ein Fahrgestell 33 auf Führungsschienen 32 gelagert. Die aus dem Fahrgestell 33 und der Fertigteilpalette 31 bestehende Bewegungseinheit übergreift den Palettenwagen 29 mit der darauf gelagerten Rohblechpalette 28 portalartig. Infolgedessen kann die Fertigteilpalette 31 längs der Führungsschienen 32 über die Rohblechpalette 28 verfahren. Die Höhe des Fahrgestells 33 ist derart gewählt, dass die Fertigteilpalette 31 mit ihrer Oberseite unterhalb der Werkstückauflage 11 der Stanzmaschine 3 liegt. Die Fertigteilpalette 31 kann daher die Werkstückauflage 11 in Richtung der in der Bewegungsrichtung 15 verlaufenden Führungsschienen 32 unterfahren bzw. von der Werkstückauflage 11 in der genannten Richtung überfahren werden.

In Figur 1 gleichfalls weitestgehend verdeckt sind Werkstückfixiervorrichtungen 34, die an der von dem Betrachter von Figur 1 abliegenden Rückseite des Auslegers 22 befestigt sind. In dem gezeigten Beispielsfall sind längs des Auslegers 22 insgesamt drei Werkstückfixiervorrichtungen 34 montiert. Gemeinsam dienen die Werkstückfixiervorrichtungen 34 dazu, bearbeitete Werkstücke von der Werkstückauflage 11 der Stanzmaschine 3 zum Entladen abzustreifen. Insofern bildet die mit den Werkstückfixiervorrichtungen 34 versehene Automatisierungseinheit 4 eine als Abstreifeinrichtung ausgebildete Entladeeinrichtung der maschinellen Anordnung 1.

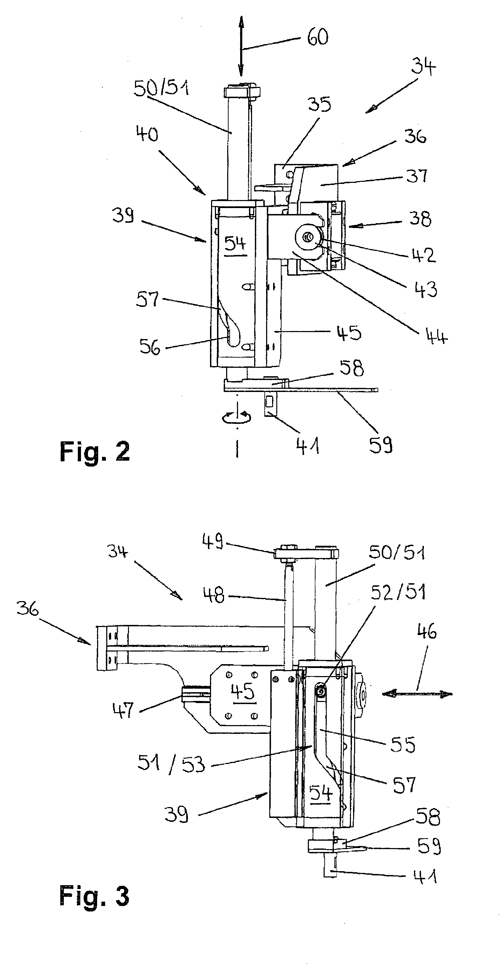

Eine der drei baugleichen Werkstückfixiervorrichtungen 34 ist in den Figuren 2 und 3 im Detail dargestellt.

An einem Querschenkel 35 eines Befestigungswinkels 36 werden die Werkstückfixiervorrichtungen 34 mit der in Figur 1 hinteren Längsseite des Auslegers 22 verschraubt und folglich mit diesem und der gesamten Werkstückhalterung 27 mechanisch und auch bewegungsmäßig verbunden. Ein Längsschenkel 37 des Befestigungswinkels 36 trägt eine erste Antriebseinheit 38. Gemeinsam mit einer zweiten Antriebseinheit 39 bildet die erste Antriebseinheit 38 einen Aktivierungs-/Deaktivierungsantrieb 40 für ein als Anschlag ausgebildetes Fixierorgan 41 der Werkstückfixiervorrichtung 34. Sowohl bei der ersten Antriebseinheit 38 als auch bei der zweiten Antriebseinheit 39 handelt es sich um eine pneumatische Kolben-/Zylindereinheit.

Auf der Kolbenstange der ersten Antriebseinheit 38 sitzt ein mit einer Umfangsnut 42 versehenes Halteelement 43. In die Umfangsnut 42 des Halteelementes 43 greift eine Lasche 44 mit einem gabelförmigen Ende ein. An dem gegenüberliegenden Ende ist die Lasche 44 mit einer Trag- und Führungsplatte 45 für die zweite Antriebseinheit 39 verschweißt.

Durch Betätigen der ersten Antriebseinheit 38 kann die zweite Antriebseinheit 39 über die Lasche 44 und die Trag- und Führungsplatte 45 in Richtung eines Doppelpfeils 46 hin und her bewegt werden. Diese Bewegungsrichtung der zweiten Antriebseinheit 39 verläuft gleichachsig mit der Bewegungsrichtung 15 der beweglichen Auflagenteile 12, 13 der Werkstückauflage 11. Bei der Bewegung in Richtung des Doppelpfeils 46 ist die zweite Antriebseinheit 39 an der von der ersten Antriebseinheit 38 abliegenden Innenseite des Befestigungswinkels 36 geführt. Eine Führungsschiene 47 an der Innenseite des Längsschenkels 37 des Befestigungswinkels 36 ist in Figur 3 zu erkennen.

Eine Kolbenstange 48 der zweiten Antriebseinheit 39 greift über ein Joch 49 an einem Führungsstab 50 an. Der Führungsstab 50 ist an dem Joch 49 um seine Längsachse drehbeweglich gelagert. Er ist Teil einer Vertikalführung 51 für das Fixierorgan 41.

Bei der Vertikalführung 51 handelt es sich um eine Kulissenführung mit einem an dem Führungsstab 50 angebrachten Führungszapfen 52 und mit einem Führungsschlitz 53, der in die achsparallele Wand eines an der Trag- und Führungsplatte 45 angebrachten Führungsrohrs 54 für den Führungsstab 50 eingearbeitet ist. Der Führungsschlitz 53 umfasst geradlinig in vertikaler Richtung verlaufende und in Umfangsrichtung des Führungsrohrs 54 gegeneinander versetzte Endabschnitte 55, 56 sowie einen die geradlinigen Endabschnitte 55, 56 miteinander verbindenden und gegen die Vertikale geneigten Übergangsabschnitt 57.

An dem zu dem Fixierorgan 41 hin liegenden Ende ist an dem Führungsstab 50 ein Arm 58 angebracht. Der Arm 58 trägt seinerseits das nach unten vorstehende Fixierorgan 41. Dieses ist bezüglich der Längsachse des Führungsstabes 50 exzentrisch angeordnet. Alles in allem ergibt sich an dem unteren Ende des Führungsstabes 50 eine kurbelartige Anordnung mit dem Fixierorgan 41 als Kurbelzapfen. An der Unterseite des Arms 58 ist eine den Arm 58 in dessen Längsrichtung überragende Führungslasche 59 angebracht.

Durch Betätigen der zweiten Antriebseinheit 39 kann der Führungsstab 50 gemeinsam mit dem daran angebrachten Fixierorgan 41 in vertikaler Richtung (Doppelpfeil) 60 angehoben und abgesenkt werden. Mit der Vertikalbewegung verbunden ist eine durch die Vertikalführung 51 bewirkte Drehbewegung des Führungsstabes 50 um dessen Längsachse. Aus der Drehbewegung des Führungsstabes 50 resultiert eine Schwenkbewegung des Fixierorgans 41 und der Führungslasche 59 um die Längsachse des Führungsstabes 50.

In den Figuren 2 und 3 ist die Kolbenstange der ersten Antriebseinheit 38 der Werkstückfixiervorrichtung 34 in den zugehörigen Kolben eingezogen. Die zweite Antriebseinheit 39 ist infolgedessen in Richtung des Doppelpfeils 46 in ihre in Einbaulage zu dem Ausleger 22 hin liegende Endposition bewegt. Gleichzeitig nimmt der Führungsstab 50 der zweiten Antriebseinheit 39 in Richtung des Doppelpfeils 60 seine obere Endlage ein. Damit verbunden ist eine Ausrichtung des an dem Führungsstab 50 drehfest montierten Armes 58 sowie der Führungslasche 59 parallel zu der Längsrichtung des Auslegers 22. Alles in allem ist die Werkstückfixiervorrichtung 34 in den Figuren 2 und 3 deaktiviert. Das Fixierorgan 41 befindet sich in der Außerfunktionsstellung.

Zur Aktivierung der Werkstückfixiervorrichtung 34 bzw. zur Überführung des Fixierorgans 41 in die Funktionsstellung sind die erste Antriebseinheit 38 und die zweite Antriebseinheit 39 ausgehend von dem Zustand gemäß den Figuren 2 und 3 zu betätigen. Aufgrund der Betätigung der ersten Antriebseinheit 38 verfährt die zweite Antriebseinheit 39 in Richtung des Doppelpfeils 46 in eine Position, in welcher sie von dem Ausleger 22 in Richtung des Doppelpfeils 46 maximal beabstandet ist. Die Betätigung der zweiten Antriebseinheit 39 hat zur Folge, dass der Führungsstab 50 in Richtung des Doppelpfeils 60 in seine untere Endposition verfährt. Mit dieser Linearbewegung des Führungsstabes 50 ist eine durch die Vertikalführung 51 bewirkte Drehbewegung des Führungsstabes 50 verbunden. In Folge der Drehbewegung des Führungsstabes 50 schwenkt das Fixierorgan 41 um die Längsachse des Führungsstabes 50 in eine Position, in welcher der Arm 58 senkrecht zu der Längsseite des Auslegers 22 verläuft und in welcher folglich das Fixierorgan 41 dem Ausleger 22 maximal angenähert ist. Am Ende der teils linearen teils rotatorischen Aktivierungsbewegung befindet sich das Fixierorgan 41 in der Funktionsstellung. Entsprechendes gilt für die Führungslasche 59, die aufgrund der Bewegung des Führungsstabes 50 gleichfalls eine geradlinige Bewegung in Richtung des Doppelpfeils 60 und eine Schwenkbewegung um die Längsachse des Führungsstabes 50 ausführt.

Ebenso wie alle übrigen wesentlichen Komponenten der maschinellen Anordnung 1 werden auch die Werkstückfixiervorrichtungen 34 durch eine in Figur 1 angedeutete numerische Maschinensteuerung 61 gesteuert.

Ein Bearbeitungszyklus an der maschinellen Anordnung 1 startet mit dem in Figur 1 dargestellten Betriebszustand. Die Werkstückhalterung 27 mit dem Ausleger 22, dem Saugerrahmen 25 und den Saugern 26 ist über der Rohblechpalette 28 angeordnet. In der Bewegungsrichtung 23 befindet sich die Werkstückhalterung 27 in der oberen Endstellung, in welcher die an dem Saugerrahmen 25 nach unten vorstehenden Sauger 26 höher liegen als die Oberseite der beweglichen Auflagenteile 12, 13 der Werkstückauflage 11.

Die Werkstückfixiervorrichtungen 34 an der Rückseite des Auslegers 22 befinden sich in dem deaktivierten Zustand gemäß den Figuren 2 und 3. Die zweite Antriebseinheit 39 einer jeden Werkstückfixiervorrichtungen 34 ist in Richtung des Doppelpfeils 46 dem Ausleger 22 maximal angenähert. Der Führungsstab 50 der zweiten Antriebseinheiten 39 befindet sich in seiner oberen Endstellung, die Fixierorgane 41 der Werkstückfixiervorrichtungen 34 nehmen dementsprechend ihre Außerfunktionsstellung ein. Der Arm 58 und die Führungslasche 59 der Werkstückfixiervorrichtungen 34 verlaufen parallel zu der Längsseite des Auslegers 22 und infolgedessen auch parallel zu der dem Ausleger 22 zugewandten vorderen Längskante des beweglichen Auflagenteils 13 der Werkstückauflage 11. Alles in allem ist der Überstand der Werkstückfixiervorrichtungen 34 in Richtung auf den beweglichen Auflagenteil 13 minimiert.

Unter dem beweglichen Auflagenteil 13 ist die Fertigteilpalette 31 in ihre zu der Querschiene 18 der Stanzmaschine 3 hin gelegene hintere Endstellung verfahren. Der bewegliche Auflagenteil 13 der Werkstückauflage 11 nimmt in Figur 1 in der Bewegungsrichtung 15 gleichfalls seine hintere Endlage ein.

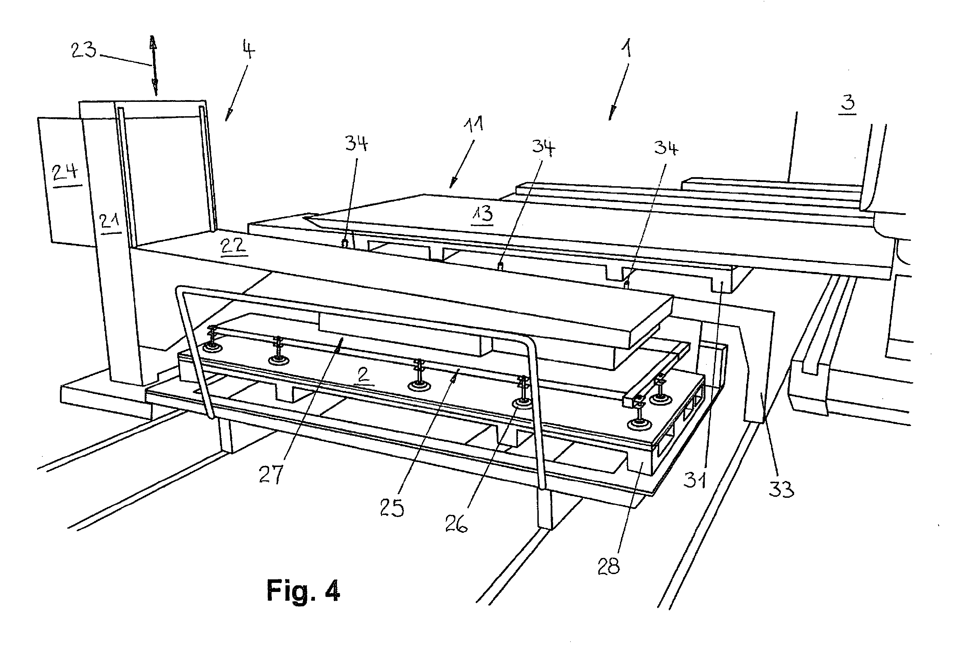

Ausgehend von den Verhältnissen gemäß Figur 1 wird die Werkstückhalterung 27 mittels des motorischen Antriebes 24 in der Bewegungsrichtung 23 abgesenkt, bis die Sauger 26 an dem Saugerrahmen 25 auf dem (Roh-)Blech 2 aufsetzen, das auf der Rohblechpalette 28 zuoberst abgelegt ist. Damit ergibt sich der Betriebszustand gemäß Figur 4.

Der Ausleger 22 und mit diesem die gesamte Werkstückhalterung 27 ist nun unterhalb der Werkstückauflage 11 angeordnet. Bei der Absenkbewegung muss unter anderem der Ausleger 22 mit den daran angebrachten Werkstückfixiervorrichtungen 34 die Werkstückauflage 11, im Einzelnen den beweglichen Auflagenteil 13, in vertikaler Richtung passieren. Dessen ungeachtet kann die Automatisierungseinheit 4 nahe an der parallel zu der Längsrichtung des Auslegers 22 verlaufenden Vorderkante des in der hinteren Endposition angeordneten beweglichen Auflagenteils 13 aufgestellt werden. Denn die Werkstückfixiervorrichtungen 34 befinden sich bei der Absenkbewegung des Auslegers 22 nach wie vor im deaktivierten Zustand. Ihr Überstand gegenüber der Rückseite des Auslegers 22 ist folglich minimiert.

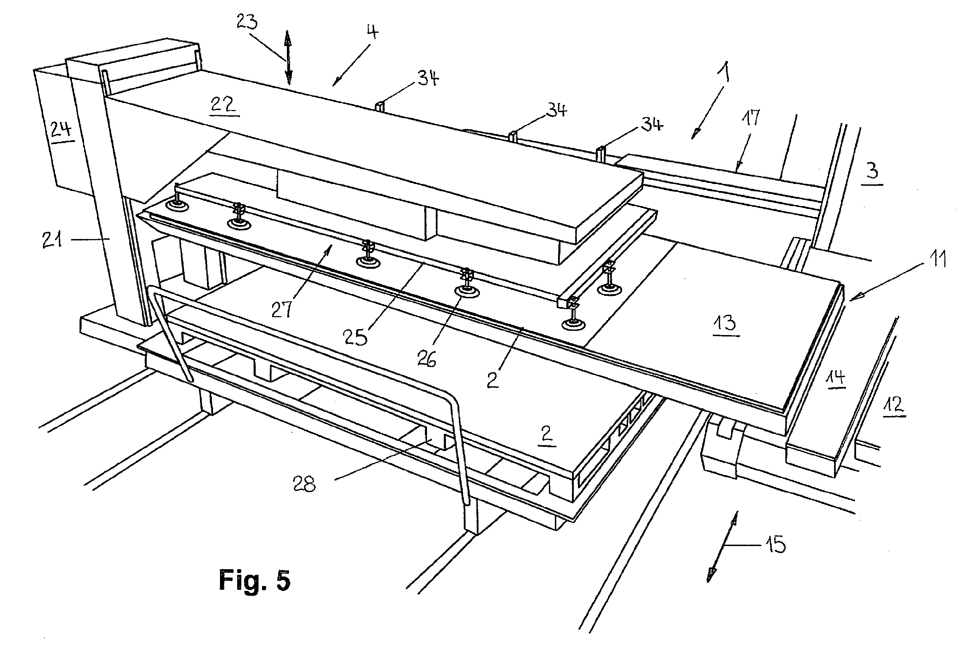

Nach dem Aufsetzen auf dem obersten (Roh-)Blech 2 der Rohblechpalette 28 werden die Sauger 26 durch Anlegen eines Unterdruckes aktiviert. Anschließend wird die Werkstückhalterung 27 mit dem an den Saugern 26 haftenden (Roh-) Blech 2 durch den motorischen Antrieb 24 mit einer Beladebewegung in Richtung auf ihre obere Endstellung gemäß Figur 1 angehoben. In der angefahrenen Position liegt auch das von der Werkstückhalterung 27 (Ausleger 22, Saugerrahmen 25, Sauger 26) gehaltene (Roh-)Blech 2 oberhalb der Werkstückauflage 11. Infolgedessen kann der bewegliche Auflagenteil 13 der Werkstückauflage 11 in der Bewegungsrichtung 15 aus seiner hinteren in seine vordere Endlage unter dem an den Saugern 26 gehaltenen (Roh-)Blech 2 verfahren, Die sich damit ergebenden Verhältnisse sind in Figur 5 veranschaulicht.

Nun werden die Sauger 26 deaktiviert und das zuvor an den Saugern 26 gehaltene (Roh-)Blech 2 wird auf die Werkstückauflage 11 bzw. den beweglichen Auflagenteil 13 übergeben und dort von den Spannpratzen der Koordinatenführung 17 übernommen. Nach der Übernahme des (Roh-)Bleches 2 verfährt die Werkstückauflage 11 zunächst in der Bewegungsrichtung 15 aus ihrer vorderen Endstellung gemäß Figur 5 in ihre hintere Endstellung. Hat die Werkstückauflage 11 ihre hintere Endstellung erreicht, so wird die Werkstückhalterung 27 bei nach wie vor deaktivierten Werkstückfixiervorrichtungen 34 wieder unter das Niveau der Werkstückauflage 11 in die Position gemäß Figur 4 abgesenkt.

Es folgt die Bearbeitung des (Roh-)Bleches 2. Dabei wird das (Roh-)Blech 2 mittels der Koordinatenführung 17 und unter Bewegen der Werkstückauflage 11 relativ zu der Stanzstation 9 der Stanzmaschine 3 bewegt. Aus dem (Roh-) Blech 2 werden Fertigteile so weit freigeschnitten bis sie nur noch über sogenannte Micro-joints mit dem Restblech verbunden sind. Aufgrund der Micro-joints verbleiben die Fertigteile im Blechverbund. Im Laufe der Blechbearbeitung überfährt die Werkstückauflage 11 mit dem beweglichen Auflagenteil 13 die zuvor in die untere Endlage abgesenkte Werkzeughalterung 27.

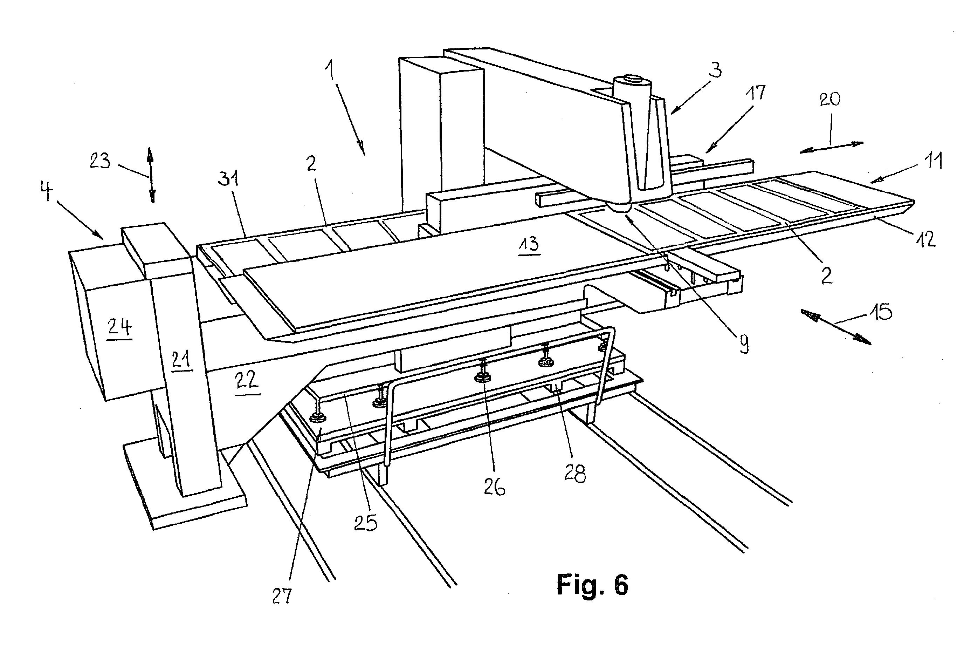

Wie in Figur 6 dargestellt, ist am Ende der Bearbeitung das (bearbeitete) Blech 2 weitestgehend auf dem beweglichen Auflagenteil 12 der Werkstückauflage 11 gelagert. Zu diesem Zeitpunkt befinden sich die beweglichen Auflagenteile 12, 13 der Werkstückauflage 11 nahe ihrer vorderen Endstellung. In Figur 6 gibt der bewegliche Auflagenteil 13 folglich den Blick frei auf die Fertigteilpalette 31, auf der bereits (bearbeitete) Bleche 2 abgelegt sind.

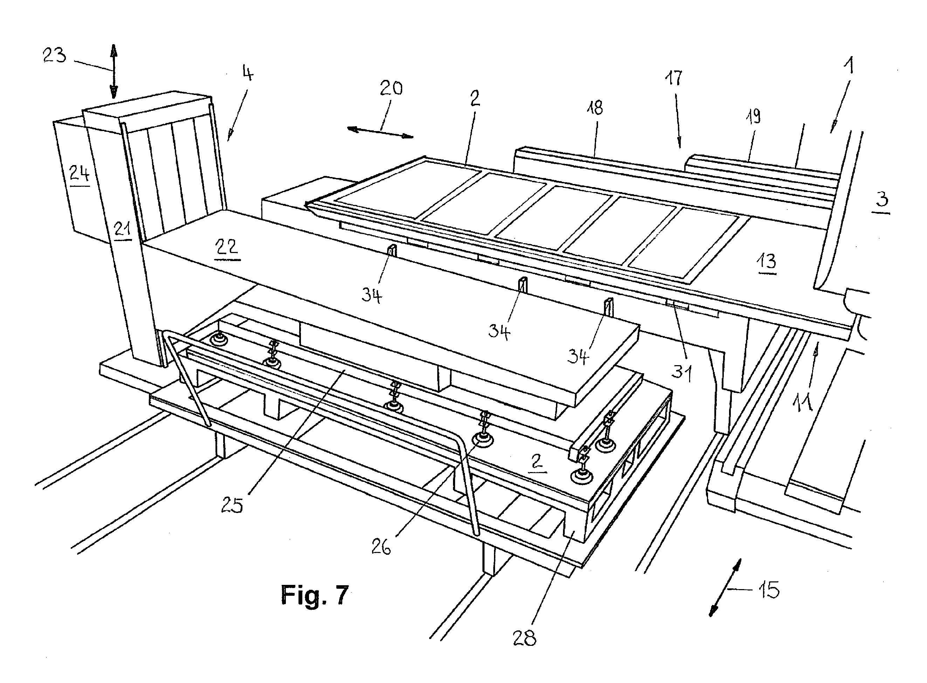

Nach Beendigung der Bearbeitung verfährt die Querschiene 18 in der Bewegungsrichtung 20 in ihre Endstellung an dem beweglichen Auflagenteil 13. Dabei nimmt die Querschiene 18 das daran mittels der Spannpratzen gehaltene (bearbeitete) Blech 2 mit. Gleichzeitig verfährt die Werkstückauflage 11 mit dem beweglichen Auflagenteil 13 in der Bewegungsrichtung 15 in die hintere Endstellung. Die Werkstückhalterung 27 ist nach wie vor abgesenkt. Die Sauger 26 der Werkstückhalterung 27 haben während der vorausgegangenen Blechbearbeitung ein weiteres (Roh-)Blech 2 von der Rohblechpalette 28 aufgenommen. Die Werkstückfixiervorrichtungen 34 an der Rückseite des Auslegers 22 der Werkstückhalterung 27 befinden sich immer noch im deaktivierten Zustand. Der betreffende Betriebszustand der maschinellen Anordnung 1 ist in Figur 7 dargestellt.

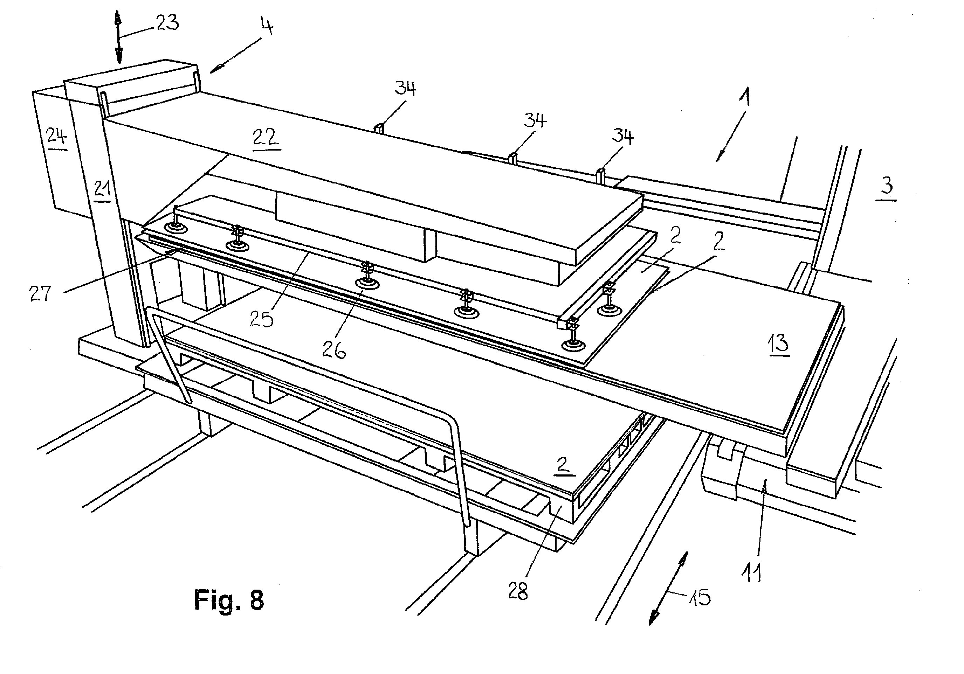

Hiervon ausgehend wird die Werkstückhalterung 27 mit dem daran haftenden Blech 2 mit einer Beladebewegung in Richtung auf die obere Endstellung angehoben. Dadurch werden gleichzeitig die an dem Ausleger 22 montierten und weiterhin deaktivierten Werkstückfixiervorrichtungen 34 mit einer Positionierbewegung in der Bewegungsrichtung 23 in die Abstreifposition überführt. Bei nach wie vor deaktivierten Werkstückfixiervorrichtungen 34 verfährt nun die Werkstückauflage 11 mit dem beweglichen Auflagenteil 13 in der Bewegungsrichtung 15 aus ihrer hinteren in ihre vordere Endstellung. Das (bearbeitete) Blech 2 auf der Werkstückauflage 11 gelangt damit unter das an der Werkstückhalterung 27 gehaltene und noch zu bearbeitende (Roh-)Blech 2 (Figur 8).

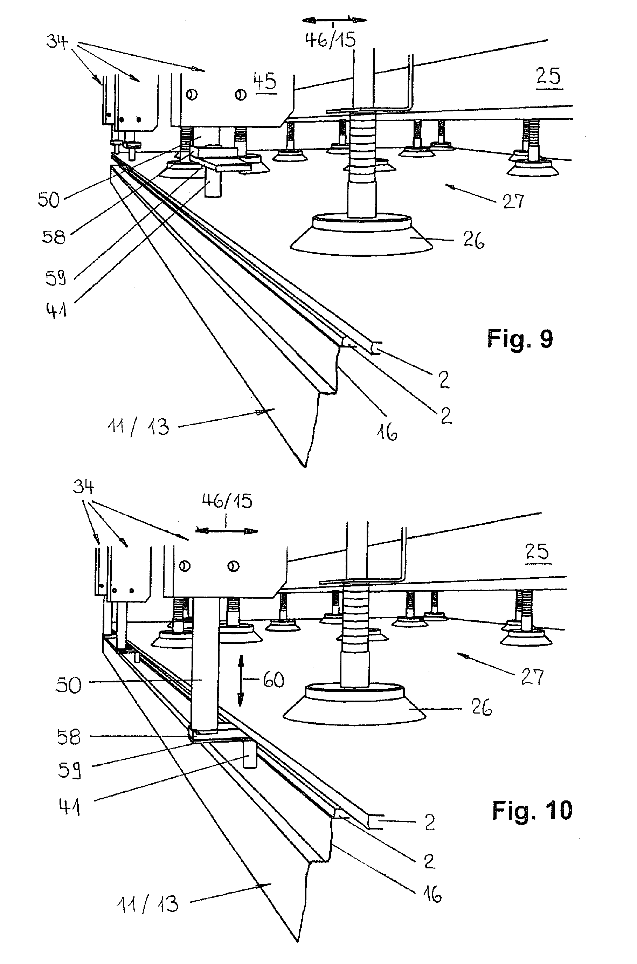

An der Rückseite des Auslegers 22 liegen die Fixierorgane 41 der deaktivierten Werkstückfixiervorrichtungen 34 oberhalb des an der Werkzeughalterung 27 haftenden (Roh-)Bleches 2 und somit auch oberhalb des auf der Werkstückauflage 11 ruhenden (bearbeiteten) Bleches 2. Die Arme 58 und die Führungslaschen 59 der in die Abstreifposition angehobenen Werkstückfixiervorrichtungen 34 erstrecken sich im wesentlichen parallel zu den hinteren Längskanten der beiden genannten Bleche 2. Dabei liegen die Arme 58 und die Führungslaschen 59 ebenso wie die Fixierorgane 41 der Werkstückfixiervorrichtungen 34 in der Bewegungsrichtung 15 bzw. in Richtung des Doppelpfeils 46 über den Blechen 2 (Figur 9).

Ausgehend von diesen Verhältnissen werden zunächst die ersten Antriebseinheiten 38 der Werkstückfixiervorrichtungen 34 betätigt (Figuren 2, 3). Infolgedessen bewegen sich die zweiten Antriebseinheiten 39 der Werkstückfixiervorrichtungen 34 in Richtung auf die Querschiene 18 der Koordinatenführung 17. Die Arme 58 und die Führungslaschen 59 der Werkstückfixiervorrichtungen 34 bleiben dabei parallel zu den Kanten des (Roh-)Bleches 2 an der Werkstückhalterung 27 und des (bearbeiteten) Bleches 2 auf der Werkstückauflage 11 ausgerichtet, sind nun aber gegenüber den genannten Blechkanten zu der Querschiene 18 hin versetzt.

Nun werden die zweiten Antriebseinheiten 39 der Werkstückfixiervorrichtungen 34 betätigt. Infolgedessen bewegen sich die Führungsstäbe 50 mit den Fixierorganen 41 ausgehend von ihrer oberen Endposition nach unten. Solange sich dabei der Führungszapfen 52 an den Führungsstäben 50 in dem geradlinigen Endabschnitt 55 des Führungsschlitzes 53 an dem Führungsrohr 54 bewegt, führt der Führungsstab 50 und mit diesem der Arm 58, die Führungslasche 59 und das Fixierorgan 41 einer jeden Werkstückfixiervorrichtung 34 ausschließlich eine nach unten gerichtete translatorische Bewegung aus. Hat im Laufe dieser translatorischen Bewegung der Arm 58 der Werkstückfixiervorrichtungen 34 das an der Werkstückhalterung 27 gehaltene (Roh-)Blech 2 passiert, so gelangt der Führungszapfen 52 der Führungsstäbe 50 in den Übergangsabschnitt 57 des jeweils zugeordneten Führungsschlitzes 53. Infolgedessen drehen sich die Führungsstäbe 50 der Werkstückfixiervorrichtungen 34 um ihre Längsachse und schwenken dadurch die Arme 58 mit den daran angebrachten Fixierorganen 41 und den Führungslaschen 59 unter das an der Werkstückhalterung 27 haftende (Roh-)Blech 2. Dabei gelangen die Arme 58 und die Führungslaschen 59 der Werkstückfixiervorrichtungen 34 in den Zwischenraum zwischen der Unterseite des (Roh-) Bleches 2 an der Werkstückhalterung 27 und der Oberseite des auf der Werkstückauflage 11 abgelegten (bearbeiteten) Bleches 2. Die Fixierorgane 41 der Werkstückfixiervorrichtungen 34 liegen am Ende ihrer Aktivierungsbewegung der hinteren Längskante des auf der Werkstückauflage 11 ruhenden (bearbeiteten) Bleches 2 gegenüber (Figur 10).

Unter der Werkstückauflage 11 ist die Fertigteilpalette 31 aus ihrer hinteren Endstellung in ihre vordere Endstellung verfahren, wo sie mit ihrer Oberseite unterhalb des beweglichen Auflagenteils 13 liegt und an ihrer Unterseite die Rohblechpalette 28 portalartig übergreift.

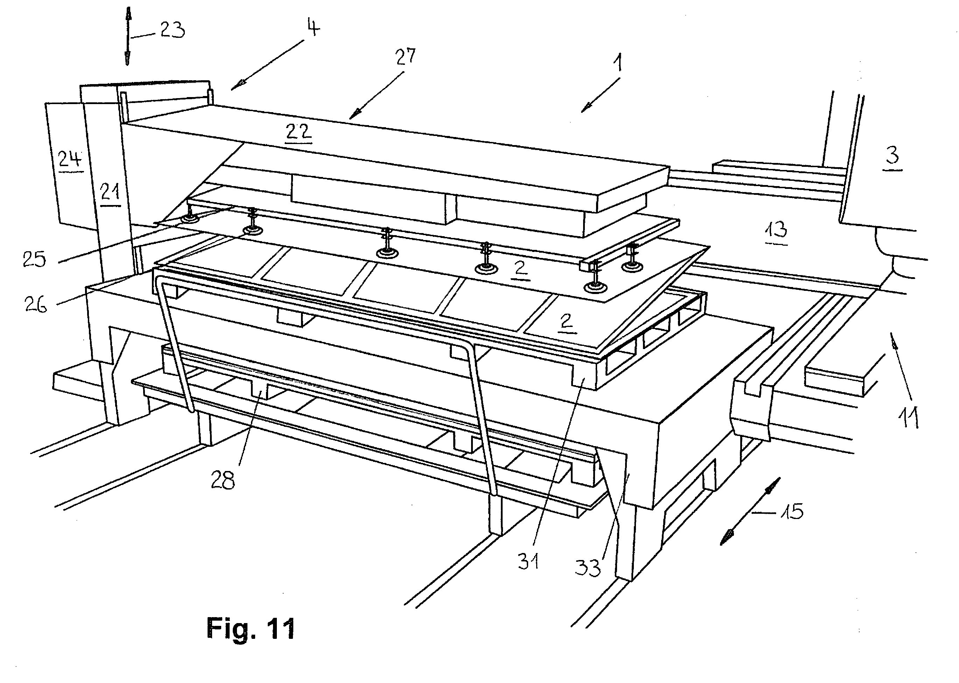

Nun wird die Werkstückauflage 11 mit dem beweglichen Auflagenteil 13 in der Bewegungsrichtung 15 aus der vorderen Endstellung in die hintere Endstellung bewegt. Das (bearbeitete) Blech 2 auf dem beweglichen Auflagenteil 13 schlägt dabei mit seiner hinteren Längskante an den Fixierorganen 41 der Werkstückfixiervorrichtungen 34 an. Die Fixierorgane 41 stützen das (bearbeitete) Blech 2 ab und hindern es dadurch an einer gemeinschaftlichen Bewegung mit dem in seine hintere Endstellung verfahrenden beweglichen Auflagenteil 13. Dadurch wird der bewegliche Auflagenteil 13 unter dem (bearbeiteten) Blech 2 herausgezogen. Das (bearbeitete) Blech 2 wird von der Werkstückauflage 11 abgestreift und gelangt auf die in ihrer vorderen Endstellung befindliche Fertigteilpalette 31 (Figur 11).

Bei ihrer Bewegung in die hintere Endlage wird die Werkstückauflage 11 von den über die Unterseite des (bearbeiteten) Bleches 2 vorstehenden Fixierorganen 41 der stationären Werkstückfixiervorrichtungen 34 in der Bewegungsrichtung 15 passiert. Dies ist problemlos möglich, nachdem die Oberseite der Werkstückauflage 11 mit Auflagebürsten 16 bestückt ist, deren elastische Borsten gegenüber den Fixierorganen 41 seitlich ausweichen können.

Die Führungslasche 59 dienen als Führung für das von der Werkstückauflage 11 abgestreifte (bearbeitete) Blech 2 bei dessen Übergang auf die Fertigteilpalette 31. Insbesondere sorgen die Führungslaschen 59 dafür, dass das von der Werkstückauflage 11 abgestreifte Werkstück nicht mit seinem hinteren Längsrand unkontrolliert nach oben schlägt und dadurch die Unterseite des an der Werkstückhalterung 27 gehaltenen (Roh-)Blechs 2 oder die Werkstückhalterung 27 selbst beschädigt.

Ist das (bearbeitete) Blech 2 von der Werkstückauflage 11 abgestreift und auf die Fertigteilpalette 31 übergeben, so werden die Werkstückfixiervorrichtungen 34 in den deaktivierten Zustand überführt und die Werkstückauflage 11 verfährt mit dem nun entladenen beweglichen Auflagenteil 13 aus der hinteren in die vordere Endstellung unter das an der Werkstückhalterung 27 haftende (Roh-)Blech 2. Zum Deaktivieren der Werkstückfixiervorrichtungen 34 werden zunächst die zweiten Antriebseinheiten 39 der Werkstückfixiervorrichtungen 34 betätigt. Dadurch werden die Arme 58 und die Führungslaschen 59 der Werkstückfixiervorrichtungen 34 parallel zu der hinteren Längskante des (Roh-)Bleches 2 ausgerichtet und über das (Roh-)Blech 2 hinaus angehoben. Anschließend werden die zweiten Antriebseinheiten 39 durch Betätigen der ersten Antriebseinheiten 38 an den Ausleger 22 der Werkstückhalterung 27 herangezogen. Damit ist die Deaktivierungsbewegung der Fixierorgane 41 beendet.

Sobald die Werkstückauflage 11 mit dem beweglichen Auflagenteil 13 unter das (Roh-)Blech 2 an der Werkstückhalterung 27 bewegt worden ist, kann das (Roh-) Blech 2 zur Durchführung der stanzenden Werkstückbearbeitung an die Werkstückauflage 11 und die Koordinatenführung 17 übergeben werden.

## Patentansprüche

1. Maschinelle Anordnung zum Bearbeiten von Werkstücken, insbesondere von Blechen (2),
• mit einer Werkstückauflage (11),
• mit einer Beladeeinrichtung (4), die eine relativ zu der Werkstückauflage (11) angetrieben bewegbare Werkstückhalterung (27) aufweist und mittels derer der Werkstückauflage (11) ein Werkstück zuführbar ist, indem die Werkstückhalterung (27) gemeinsam mit einem daran festgelegten Werkstück mit einer Beladebewegung relativ zu der Werkstückauflage (11) bewegbar ist sowie
• mit einer Entladeeinrichtung (4) in Form einer Abstreifeinrichtung, die eine Werkstückfixiervorrichtung (34) aufweist und mittels derer ein Werkstück von der Werkstückauflage (11) abstreifbar ist, indem die Werkstückfixiervorrichtung (34) mit einer Positionierbewegung in eine Abstreifposition bewegbar ist, in welcher ein abzustreifendes Werkstück an der Werkstückfixiervorrichtung (34) festlegbar ist und indem das an der Werkstückfixiervorrichtung (34) festgelegte Werkstück einerseits und die Werkstückauflage (11) andererseits unter Abstreifen des Werkstücks von der Werkstückauflage (11) mit einer Abstreifbewegung relativ zueinander bewegbar sind,
**dadurch gekennzeichnet, dass**
die Werkstückfixiervorrichtung (34) der Abstreifeinrichtung bei wenigstens einem Teil der Positionierbewegung in die Abstreifposition mit der Werkstückhalterung (27) der Beladeeinrichtung (4) bewegungsverbunden ist.

2. Maschinelle Anordnung nach Anspruch 1, **dadurch gekennzeichnet, dass** die Werkstückfixiervorrichtung (34) bei wenigstens einem Teil der Positionierbewegung mit der Werkstückhalterung (27) mittels einer mechanischen Verbindung bewegungsverbunden ist.

3. Maschinelle Anordnung nach einem der vorhergehenden Ansprüche, **dadurch gekennzeichnet, dass** die Werkstückhalterung (27) eine Tragstruktur (22) aufweist und dass die Werkstückfixiervorrichtung (34) an der Tragstruktur (22) der Werkstückhalterung (27) angebracht ist.

4. Maschinelle Anordnung nach einem der vorhergehenden Ansprüche, **dadurch gekennzeichnet, dass** die Werkstückfixiervorrichtung (34) und/oder die Werkstückhalterung (27) unter die Werkstückauflage (11) absenkbar ist bzw. sind.

5. Maschinelle Anordnung nach einem der vorhergehenden Ansprüche, **dadurch gekennzeichnet, dass** die Werkstückauflage (11) relativ zu der in der Abstreifposition befindlichen Werkstückfixiervorrichtung (34) bewegbar ist und dass ein Werkstück von der Werkstückauflage (11) abstreifbar ist, indem die Werkstückauflage (11) unter Abstreifen des Werkstücks von der Werkstückauflage (11) mit einer Abstreifbewegung relativ zu dem an der Werkstückfixiervorrichtung (34) festgelegten Werkstück bewegbar ist.

6. Maschinelle Anordnung nach einem der vorhergehenden Ansprüche, **dadurch gekennzeichnet, dass** die Werkstückfixiervorrichtung (34) ein Fixierorgan (41) aufweist, über welches das abzustreifende Werkstück an der Werkstückfixiervorrichtung (34) festlegbar ist.

7. Maschinelle Anordnung nach einem der vorhergehenden Ansprüche, **dadurch gekennzeichnet, dass** die Werkstückfixiervorrichtung (34) in der Abstreifposition aktivierbar oder deaktivierbar ist, wobei das abzustreifende Werkstück an der aktivierten Werkstückfixiervorrichtung (34) festlegbar ist.

8. Maschinelle Anordnung nach einem der vorhergehenden Ansprüche, **dadurch gekennzeichnet, dass** die Werkstückfixiervorrichtung (34) aktivierbar oder deaktivierbar ist, indem die Werkstückfixiervorrichtung (34) ein Fixierorgan (41) aufweist, welches bei Abstreifposition der Werkstückfixiervorrichtung (34) mit einer Aktivierungsbewegung in eine Funktionsstellung oder mit einer Deaktivierungsbewegung in eine Außerfunktionsstellung bewegbar ist, wobei das abzustreifende Werkstück über das in der Funktionsstellung befindliche Fixierorgan (41) der Fixiervorrichtung (34) festlegbar ist.

9. Maschinelle Anordnung nach einem der vorhergehenden Ansprüche, **dadurch gekennzeichnet, dass** das Fixierorgan (41) der Werkstückfixiervorrichtung (34) mit einer wenigstens teilweise linearen Aktivierungsbewegung aus der Außerfunktionsstellung in die Funktionsstellung und/oder mit einer wenigstens teilweise linearen Deaktivierungsbewegung aus der Funktionsin die Außerfunktionsstellung bewegbar ist.

10. Maschinelle Anordnung nach einem der vorhergehenden Ansprüche, **dadurch gekennzeichnet, dass** das Fixierorgan (41) mittels einer Kolben-/Zylindereinheit (38, 39) in die Funktionsstellung und/oder in die Außerfunktionsstellung bewegbar ist.

11. Maschinelle Anordnung nach einem der vorhergehenden Ansprüche, **dadurch gekennzeichnet, dass** das Fixierorgan (41) der Werkstückfixiervorrichtung (34) als Anschlag ausgebildet ist, an welchem das abzustreifende Werkstück zur Festlegung an der Werkstückfixiervorrichtung (34) abstützbar ist.

12. Maschinelle Anordnung nach einem der vorhergehenden Ansprüche, **dadurch gekennzeichnet, dass** die Werkstückfixiervorrichtung (34) eine Führung (59) für ein von der Werkstückauflage (11) abgestreiftes Werkstück aufweist.

13. Verfahren zum Entladen von Werkstücken von einer Werkstückauflage (11) einer maschinellen Anordnung (1) zum Bearbeiten von Werkstücken, insbesondere von Blechen (2), die eine Beladeeinrichtung (4) mit einer relativ zu der Werkstückauflage (11) angetrieben bewegbaren Werkstückhalterung (27) sowie eine Entladeeinrichtung (4) in Form einer Abstreifeinrichtung mit einer Werkstückfixiervorrichtung (34) aufweist,
• wobei der Werkstückauflage (11) mittels der Beladeeinrichtung (4) ein Werkstück zugeführt wird, indem die Werkstückhalterung (27) der Beladeeinrichtung (4) gemeinsam mit einem daran festgelegten Werkstück mit einer Beladebewegung relativ zu der Werkstückauflage (11) bewegt wird und
• wobei von der Werkstückauflage (11) mittels der Abstreifeinrichtung ein Werkstück abgestreift wird, indem die Werkstückfixiervorrichtung (34) der Abstreifeinrichtung mit einer Positionierbewegung in eine Abstreifposition bewegt wird, in welcher ein abzustreifendes Werkstück an der Werkstückfixiervorrichtung (34) festgelegt wird und indem das an der Werkstückfixiervorrichtung (34) festgelegte Werkstück einerseits und die Werkstückauflage (11) andererseits unter Abstreifen des Werkstückes von der Werkstückauflage (11) mit einer Abstreifbewegung relativ zueinander bewegt werden,
**dadurch gekennzeichnet, dass**
die Werkstückfixiervorrichtung (34) der Abstreifeinrichtung wenigstens einen Teil der Positionierbewegung in die Abstreifposition gemeinsam mit der Werkstückhalterung (27) der Beladeeinrichtung (4) ausführt.

## Claims

1. Mechanical arrangement for processing workpieces, in particular metal sheets (2),
• having a workpiece support (11),
• having a loading device (4) which has a workpiece retention member (27) which can be moved in a driven manner relative to the workpiece support (11) and by means of which a workpiece can be supplied to the workpiece support (11) in that the workpiece retention member (27) can be moved together with a workpiece secured thereto with a loading movement relative to the workpiece support (11) and
• having an unloading device (4) in the form of a sweeping device which has a workpiece fixing device (34) and by means of which a workpiece can be swept off the workpiece support (11) in that the workpiece fixing device (34) can be moved with a positioning movement into a sweeping position, in which a workpiece to be swept off can be secured to the workpiece fixing device (34) and in that the workpiece secured to the workpiece fixing device (34), on the one hand, and the workpiece support (11), on the other hand, can be moved relative to each other with a sweeping movement so as to sweep the workpiece off the workpiece support (11),
**characterised in that**
the workpiece fixing device (34) of the sweeping device is connected in terms of movement to the workpiece retention member (27) of the loading device (4) during at least a portion of the positioning movement into the sweeping position.

2. Mechanical arrangement according to claim 1, **characterised in that** the workpiece fixing device (34) is connected in terms of movement to the workpiece retention member (27) by means of a mechanical connection during at least a portion of the positioning movement.

3. Mechanical arrangement according to either of the preceding claims, **characterised in that** the workpiece retention member (27) has a carrier structure (22) and **in that** the workpiece fixing device (34) is fitted to the carrier structure (22) of the workpiece retention member (27).

4. Mechanical arrangement according to any one of the preceding claims, **characterised in that** the workpiece fixing device (34) and/or the workpiece retention member (27) can be lowered below the workpiece support (11).

5. Mechanical arrangement according to any one of the preceding claims, **characterised in that** the workpiece support (11) can be moved relative to the workpiece fixing device (34) located in the sweeping position and **in that** a workpiece can be swept off the workpiece support (11) **in that** the workpiece support (11) can be moved with a sweeping movement relative to the workpiece secured to the workpiece fixing device (34) so as to sweep the workpiece off the workpiece support (11).

6. Mechanical arrangement according to any one of the preceding claims, **characterised in that** the workpiece fixing device (34) has a fixing member (41) by means of which the workpiece to be swept off can be secured to the workpiece fixing device (34).

7. Mechanical arrangement according to any one of the preceding claims, **characterised in that** the workpiece fixing device (34) can be activated or deactivated in the sweeping position, the workpiece to be swept off being able to be secured to the activated workpiece fixing device (34).

8. Mechanical arrangement according to any one of the preceding claims, **characterised in that** the workpiece fixing device (34) can be activated or deactivated **in that** the workpiece fixing device (34) has a fixing member (41) which can be moved, in the sweeping position of the workpiece fixing device (34), with an activation movement into an operating position or with a deactivation movement into a non-operating position, the workpiece to be swept off being able to be secured by means of the fixing member (41) of the fixing device (34) located in the operating position.

9. Mechanical arrangement according to any one of the preceding claims, **characterised in that** the fixing member (41) of the workpiece fixing device (34) can be moved with an at least partially linear activation movement out of the non-operating position into the operating position and/or with an at least partially linear deactivation movement out of the operating position into the non-operating position.

10. Mechanical arrangement according to any one of the preceding claims, **characterised in that** the fixing member (41) can be moved into the operating position and/or into the non-operating position by means of a piston/cylinder unit (38, 39).

11. Mechanical arrangement according to any one of the preceding claims, **characterised in that** the fixing member (41) of the workpiece fixing device (34) is in the form of a stop, on which the workpiece to be swept off can be supported in order to be secured to the workpiece fixing device (34).

12. Mechanical arrangement according to any one of the preceding claims, **characterised in that** the workpiece fixing device (34) has a guide (59) for a workpiece which has been swept off the workpiece support (11).

13. Method for unloading workpieces from a workpiece support (11) of a mechanical arrangement (1) for processing workpieces, in particular metal sheets (2), which has a loading device (4) having a workpiece retention member (27) which is movable in a driven manner relative to the workpiece support (11) and an unloading device (4) in the form of a sweeping device having a workpiece fixing device (34),
• a workpiece being supplied to the workpiece support (11) by means of the loading device (4) in that the workpiece retention member (27) of the loading device (4) is moved together with a workpiece secured thereto with a loading movement relative to the workpiece support (11) and
• a workpiece being swept off the workpiece support (11) by means of the sweeping device in that the workpiece fixing device (34) of the sweeping device is moved with a positioning movement into a sweeping position, in which a workpiece to be swept off is secured to the workpiece fixing device (34) and in that the workpiece secured to the workpiece fixing device (34), on the one hand, and the workpiece support (11), on the other hand, are moved relative to each other with a sweeping movement so as to sweep the workpiece off the workpiece support (11),
**characterised in that**
the workpiece fixing device (34) of the sweeping device carries out at least a portion of the positioning movement into the sweeping position together with the workpiece retention member (27) of the loading device (4).

## Revendications

1. Système mécanique pour l'usinage de pièces, en particulier de tôles (2),
- avec un porte-pièce (11),
- avec un dispositif de chargement (4), qui présente un support de pièce (27) entraîné en déplacement par rapport au porte-pièce (11) et au moyen duquel une pièce peut être apportée au porte-pièce (11), par le fait que le support de pièce (27) peut, conjointement avec une pièce fixée sur lui, être déplacé par rapport au porte-pièce (11) par un mouvement de chargement,
- et avec un dispositif de déchargement (4) sous la forme d'un dispositif racleur, qui présente un dispositif de fixation de pièce (34) et au moyen duquel une pièce peut être évacuée du porte-pièce (11) par raclage, par le fait que le dispositif de fixation de pièce (34) peut, par un mouvement de positionnement, être déplacé dans une position de raclage dans laquelle une pièce à évacuer par raclage peut être fixée sur le dispositif de fixation de pièce (34), et par le fait que la pièce fixée sur le dispositif de fixation de pièce (34) d'une part et le porte-pièce (11) d'autre part peuvent être déplacés l'un par rapport à l'autre par un mouvement de raclage avec évacuation de la pièce du porte-pièce (11) par raclage,
**caractérisé en ce que** le dispositif de fixation de pièce (34) du dispositif racleur est, dans au moins une partie du mouvement de positionnement dans la position de raclage, lié en déplacement au support de pièce (27) du dispositif de chargement (4).

2. Système mécanique selon la revendication 1, **caractérisé en ce que** le dispositif de fixation de pièce (34) est, dans au moins une partie du mouvement de positionnement, lié en déplacement au support de pièce (27) au moyen d'une liaison mécanique.

3. Système mécanique selon l'une des revendications précédentes, **caractérisé en ce que** le support de pièce (27) présente une structure porteuse (22), et **en ce que** le dispositif de fixation de pièce (34) est installé sur la structure porteuse (22) du support de pièce (27).

4. Système mécanique selon l'une des revendications précédentes, **caractérisé en ce que** le dispositif de fixation de pièce (34) et/ou le support de pièce (27) peut/peuvent être abaissés en dessous du porte-pièce (11).

5. Système mécanique selon l'une des revendications précédentes, **caractérisé en ce que** le porte-pièce (11) peut être déplacé par rapport au dispositif de fixation de pièce (34) se trouvant dans la position de raclage, et **en ce qu'**une pièce peut être évacuée du porte-pièce (11) par raclage par le fait que le porte-pièce (11) peut être déplacé par un mouvement de raclage par rapport à la pièce fixée sur le dispositif de fixation de pièce (34), avec évacuation de la pièce du porte-pièce (11) par raclage.

6. Système mécanique selon l'une des revendications précédentes, **caractérisé en ce que** le dispositif de fixation de pièce (34) présente un organe de fixation (41) au moyen duquel la pièce à évacuer par raclage peut être fixée sur le dispositif de fixation de pièce (34).

7. Système mécanique selon l'une des revendications précédentes, **caractérisé en ce que** le dispositif de fixation de pièce (34) peut être activé ou désactivé dans la position de raclage, sachant que la pièce à évacuer par raclage peut être fixée sur le dispositif de fixation de pièce (34) activé.

8. Système mécanique selon l'une des revendications précédentes, **caractérisé en ce que** le dispositif de fixation de pièce (34) peut être activé ou désactivé par le fait que le dispositif de fixation de pièce (34) présente un organe de fixation (41) qui, dans la position de raclage du dispositif de fixation de pièce (34), peut être déplacé par un mouvement d'activation dans une position de fonctionnement ou par un mouvement de désactivation dans une position de non-fonctionnement, sachant que la pièce à évacuer par raclage peut être fixée au moyen de l'organe de fixation (41) du dispositif de fixation (34) se trouvant dans la position de fonctionnement.

9. Système mécanique selon l'une des revendications précédentes, **caractérisé en ce que** l'organe de fixation (41) du dispositif de fixation de pièce (34) peut être déplacé de la position de non-fonctionnement dans la position de fonctionnement par un mouvement d'activation au moins partiellement linéaire, et/ou peut être déplacé de la position de fonctionnement dans la position de non-fonctionnement par un mouvement de désactivation au moins partiellement linéaire.

10. Système mécanique selon l'une des revendications précédentes, **caractérisé en ce que** l'organe de fixation (41) peut être déplacé dans la position de fonctionnement et/ou dans la position de non-fonctionnement au moyen d'un ensemble piston-cylindre (38, 39).

11. Système mécanique selon l'une des revendications précédentes, **caractérisé en ce que** l'organe de fixation (41) du dispositif de fixation de pièce (34) est réalisé sous forme de butée, contre laquelle peut être soutenue la pièce à évacuer par raclage pour sa fixation sur le dispositif de fixation de pièce (34).

12. Système mécanique selon l'une des revendications précédentes, **caractérisé en ce que** le dispositif de fixation de pièce (34) présente un guide (59) pour une pièce évacuée du porte-pièce (11) par raclage.

13. Procédé pour décharger des pièces d'un porte-pièce (11) d'un système mécanique (1) pour l'usinage de pièces, en particulier de tôles (2), qui présente un dispositif de chargement (4) doté d'un support de pièce (27) entraîné en déplacement par rapport au porte-pièce (11) ainsi qu'un dispositif de déchargement (4) sous la forme d'un dispositif racleur doté d'un dispositif de fixation de pièce (34),
- sachant qu'une pièce est apportée au porte-pièce (11) au moyen du dispositif de chargement (4), par le fait que le support de pièce (27) du dispositif de chargement (4) est, conjointement avec une pièce fixée sur lui, déplacé par rapport au porte-pièce (11) par un mouvement de chargement,
- et sachant qu'une pièce est évacuée du porte-pièce (11) par raclage au moyen du dispositif racleur, par le fait que le dispositif de fixation de pièce (34) du dispositif racleur est, par un mouvement de positionnement, déplacé dans une position de raclage dans laquelle une pièce à évacuer par raclage est fixée sur le dispositif de fixation de pièce (34), et par le fait que la pièce fixée sur le dispositif de fixation de pièce (34) d'une part et le porte-pièce (11) d'autre part sont déplacés l'un par rapport à l'autre par un mouvement de raclage avec évacuation de la pièce du porte-pièce (11) par raclage,
**caractérisé en ce que** le dispositif de fixation de pièce (34) du dispositif racleur accomplit au moins une partie du mouvement de positionnement dans la position de raclage conjointement avec le support de pièce (27) du dispositif de chargement (4).
